# EUROPEAN PATENT APPLICATION

(11) **EP 4 134 647 A1**
(43) Date of publication of application: **15.02.2023**
(21) Application number: 21785235.9
(22) Date of filing: 30.03.2021
(51) Int. Cl.: G01L 1/26

(54) **SIGNAL PROCESSING CIRCUIT AND LOAD DETECTION DEVICE**

(30) Priority: 09.04.2020 JP 2020070475
(71) Applicant: Minebea Mitsumi Inc., Kitasaku-gun, Nagano 3890293 (JP)
(72) Inventor: YAMAMOTO, Kosuke, Tama-shi, Tokyo 206-8567 (JP)
(74) Representative: Regimbeau
(86) International application number: PCT/JP2021/013520
(87) International publication number: WO 2021/205942

(57) **Abstract**

A signal processing circuit is a signal processing circuit configured to detect a load on a target, and is configured to obtain a first output value of a first physical sensor that is provided in such a manner that a detection value of the first physical sensor changes in accordance with the load on the target, and a second output value of a second physical sensor that is provided in such a manner that a detection value of the second physical sensor does not change in accordance with the load on the target, the second physical sensor having an electrical characteristic that is the same as an electrical characteristic of the first physical sensor; and the signal processing circuit is configured to calculate, as a load detection value indicating the load on the target, a difference value between the first output value and the second output value.

## Description

### [Technical Field]

The present invention relates to a signal processing circuit and a load detection device.

### [Background Art]

Patent Document 1 discloses a technique for estimating a degree of deterioration of a strain sensor based on a reduction rate of a capacitance of the strain sensor in a sensor node equipped with the strain sensor having a piezoelectric effect, and calculating a strain measurement value using a correction value in accordance with the degree of deterioration of the strain sensor.

### [Prior Art Documents]

### [Patent Documents]

[Patent Document 1] Japanese Unexamined Patent Application Publication No. 2017-3370

### [Summary of the Invention]

### [Problem to be Solved by the Invention]

However, the technique described in Patent Document 1 cannot accurately calculate the degree of deterioration of the strain sensor because the degree of deterioration of the strain sensor is estimated, and therefore, the strain measurement value cannot be calculated with higher accuracy.

### [Means for Solving the Problem]

The signal processing circuit according to one embodiment is a signal processing circuit configured to detect a load on a target, and obtain a first output value of a first physical sensor that is provided in such a manner that a detection value of the first physical sensor changes in accordance with the load on the target, and a second output value of a second physical sensor that is provided in such a manner that a detection value of the second physical sensor does not change in accordance with the load on the target, the second physical sensor having an electrical characteristic that is the same as an electrical characteristic of the first physical sensor. The signal processing circuit is further configured to calculate, as a load detection value indicating the load on the target, a difference value between the first output value and the second output value.

### [Advantageous Effects of the Invention]

In the signal processing circuit according to the embodiment, it is possible to calculate a highly accurate load detection value in consideration of the variations with time of the detection values of the physical sensors.

### [Brief Description of Drawings]

[FIG. 1] FIG. 1 is a block diagram of a load detection device according to the embodiment.
[FIG. 2] FIG. 2 depicts output characteristics of a first strain sensor and a second strain sensor according to the embodiment.
[FIG. 3] FIG. 3 is a diagram illustrating variations with time in output voltage values of the first strain sensor and the second strain sensor according to the embodiment.
[FIG. 4] FIG. 4 is a diagram depicting a variation with time of a difference value between a first output voltage value and a second output voltage value according to the embodiment.
[FIG. 5] FIG. 5 is a flowchart illustrating a procedure of processing by a signal processing circuit according to the embodiment.

### [Mode for Carrying out the Invention]

The embodiment will now be described with reference to the drawings.

### (Configuration of Load Detection Device 10)

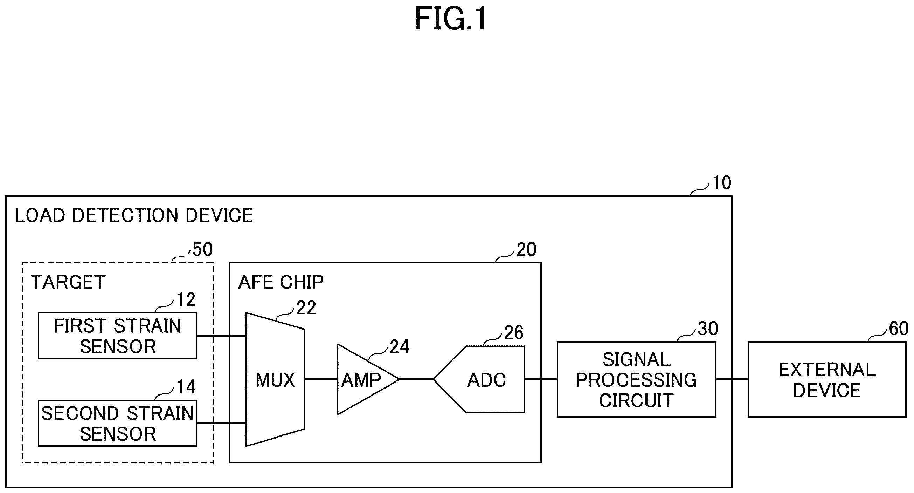

FIG. 1 is a diagram depicting a configuration of a load detection device 10 according to the embodiment. The load detection device 10 depicted in FIG. 1 is a device for detecting a load on a target 50. As depicted in FIG. 1, the load detection device 10 includes a first strain sensor 12, a second strain sensor 14, an AFE chip 20, and a signal processing circuit 30.

The first strain sensor 12 is an example of a "first physical sensor" and is a resistance-change-type strain sensor in which a resistance value (detection value) changes according to a strain amount. The first strain sensor 12 is securely attached to the target 50 in such a manner that when a load is applied to the target 50 and a strain occurs, the resistance value (hereinafter referred to as a "first resistance value") of the first strain sensor 12 changes accordingly. For example, a double-sided tape, an adhesive, or the like is used for securely attaching the first strain sensor 12 to the target 50. As a result, the first resistance value of the first strain sensor 12 changes when a load is applied to the target 50 to cause a strain. For example, when the first strain sensor 12 expands with the strain of the target 50, the first resistance value increases in accordance with the strain amount of the target 50. Conversely, when the first strain sensor 12 contracts with the strain of the target 50, the first resistance value decreases in accordance with the strain amount of the target 50.

The second strain sensor 14 is an example of a "second physical sensor" and is a resistance-change-type strain sensor in which a resistance value (detection value) changes according to a strain amount. The second strain sensor 14 has the same electrical characteristics as those of the first strain sensor 12. The second strain sensor 14 has the same resistance change amount with time as that of the first strain sensor 12. The second strain sensor 14 is installed in such a manner that the resistance value (hereinafter referred to as a "second resistance value") of the second strain sensor 14 does not change even when a load is applied to the target 50 and a strain occurs. For example, the second strain sensor 14 is installed in such a manner that the second resistance value does not change even when a load is applied to the target 50 and a strain occurs, for example, as a result of being installed in a case that is not affected by the strain of the target 50 or being installed apart from the target 50.

Although not depicted, the first strain sensor 12 is configured to output a voltage value (hereinafter referred to as a "first output voltage value") in accordance with the first resistance value of the first strain sensor 12 as an example of a "first output value" as a result of having a structure of a bridge circuit or the like.

Similarly, the second strain sensor 14 is configured to output a voltage value (hereinafter referred to as a "second output voltage value") in accordance with the second resistance value of the second strain sensor 14 as an example of a "second output value" as a result of having a structure of a bridge circuit or the like.

The AFE (analog front end) chip 20 is an integrated circuit connected between the first strain sensor 12 and the signal processing circuit 30 and between the second strain sensor 14 and the signal processing circuit 30. As depicted in FIG. 1, the AFE chip 20 includes a multiplexer (MUX) 22, an amplifier (AMP) 24, and an analog-to-digital converter (ADC) 26.

The input terminals of the multiplexer 22 are connected to the output terminal of the first strain sensor 12 and the output terminal of the second strain sensor 14. The output terminal of the multiplexer 22 is connected to the input terminal of the amplifier 24. The multiplexer 22 selectively switches between the first output voltage value output from the first strain sensor 12 and the second output voltage value output from the second strain sensor 14 to output either the first output voltage value output from the first strain sensor 12 or the second output voltage value output from the second strain sensor 14 to the amplifier 24.

The input terminal of the amplifier 24 is connected to the output terminal of the multiplexer 22. The output terminal of the amplifier 24 is connected to the input terminal of the analog-to-digital converter 26. The amplifier 24 amplifies the first output voltage value or the second output voltage value output from the multiplexer 22 and outputs the thus obtained voltage value to the analog-to-digital converter 26.

The input terminal of the analog-to-digital converter 26 is connected to the output terminal of the amplifier 24. The output terminal of the analog-to-digital converter 26 is connected to the input terminal of the signal processing circuit 30. The analog-to-digital converter 26 converts the first output voltage value or the second output voltage value output from the amplifier 24 from an analog signal to a digital signal and outputs the thus obtained digital signal to the signal processing circuit 30.

The input terminal of the signal processing circuit 30 is connected to the output terminal of the analog-to-digital converter 26. The output terminal of the signal processing circuit 30 is connected to an external device 60 (which is, for example, a microcomputer, but may be a personal computer, a smartphone, a tablet terminal, a server, or the like), via wire or wirelessly depending on the purpose of using the load detection device 10.

The signal processing circuit 30 calculates a load detection value indicating the load on the target 50 based on the first output voltage value and the second output voltage value output from the analog-to-digital converter 26. Then, the signal processing circuit 30 outputs the calculated load detection value to the external device 60. Specifically, the signal processing circuit 30 calculates a difference value between the first output voltage value and the second output voltage value as the load detection value indicating the load on the target 50.

As described above, the second strain sensor 14 is installed in such a manner that the second resistance value does not change even when a load is applied to the target 50, and the variation with time of the first output voltage value of the first strain sensor 12 is the same as the variation with time of the second output voltage value of the second strain sensor 14. Therefore, by subtracting the second output voltage value from the first output voltage value, the signal processing circuit 30 can calculate the load detection value in which the variation with time of the first output voltage value is offset by the variation with time of the second output voltage value.

The signal processing circuit 30 is implemented, for example, by a processor, a memory, and the like provided in the AFE (analog front end) chip 20.

### (Output Characteristics of First Strain sensor 12 and Second Strain sensor 14)

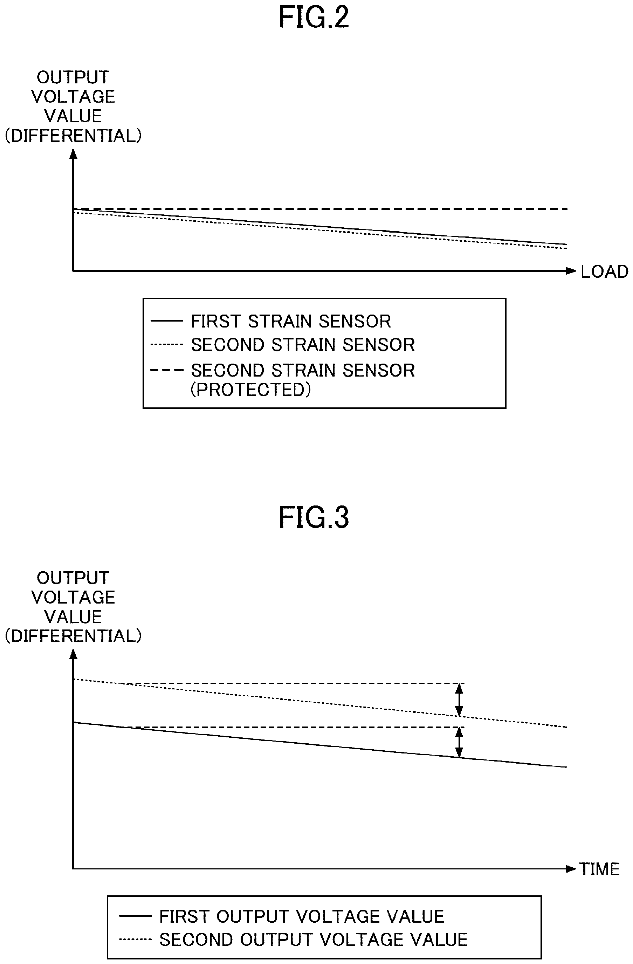

FIG. 2 is a diagram depicting the output characteristics of the first strain sensor 12 and the second strain sensor 14 according to the embodiment. In the graph depicted in FIG. 2, the horizontal axis indicates the load applied to the target 50, and the vertical axis indicates the output voltage values of the first strain sensor 12 and the second strain sensor 14.

In the graph depicted in FIG. 2, the solid line indicates the first output voltage value of the first strain sensor 12. The dotted line indicates the second output voltage value of the second strain sensor 14 to be used as a reference. The broken line indicates the second output voltage value of the second strain sensor 14 obtained when the second strain sensor 14 is installed in such a manner that the second resistance value does not change.

As depicted by the solid line in FIG. 2, because the first strain sensor 12 is securely attached to the target 50, the first output voltage value decreases at a constant decreasing rate as the load applied to the target 50 increases.

As depicted by the dotted line in FIG. 2, because the second strain sensor has the same electrical characteristics as those of the first strain sensor 12, if the second strain sensor 14 were securely attached to the target 50, the second output voltage value would decrease at a constant decreasing rate (the same decreasing rate as the decreasing rate of the first output voltage value) as the load applied to the target 50 increases.

However, in the load detection device 10 according to the present embodiment, the second strain sensor 14 is installed in such a manner that the second output voltage value does not change even when a load is applied to the target 50 and a strain occurs accordingly. Therefore, as depicted by the broken line in FIG. 2, in the load detection device 10 according to the present embodiment, the second output voltage value of the second strain sensor 14 is constant regardless of a change in the load applied to the target 50.

### (Variations with Time of Output Voltage Values of First Strain sensor 12 and Second Strain sensor 14)

FIG. 3 is a diagram depicting variations with time in the output voltage values of the first strain sensor 12 and the second strain sensor 14 according to the embodiment. In the graph depicted in FIG. 3, the horizontal axis indicates time, and the vertical axis indicates the output voltage values of the first strain sensor 12 and the second strain sensor 14. FIG. 3 depicts the output voltage values of the first strain sensor 12 and the second strain sensor 14 under the condition that a constant load is applied to the object. Therefore, in FIG. 3, a difference is generated between the output voltage value of the first strain sensor 12 and the output voltage value of the second strain sensor 14 in accordance with the constant load.

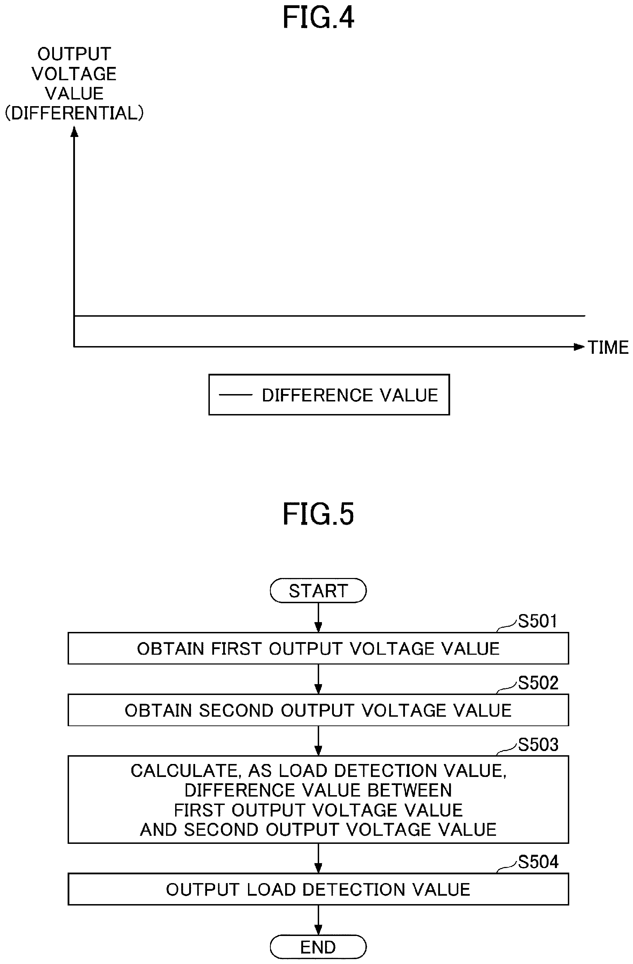

FIG. 4 is a diagram depicting a variation with time of the difference value between the first output voltage value and the second output voltage value according to the embodiment. In the graph depicted in FIG. 4, the horizontal axis indicates time, and the vertical axis indicates the difference value between the first output voltage value and the second output voltage value.

The first strain sensor 12 and the second strain sensor 14 have the same electrical characteristics and are manufactured through the same processes. Therefore, as depicted in FIG. 3, the first output voltage value of the first strain sensor 12 and the second output voltage value of the second strain sensor 14 decrease at the same decreasing rate as time elapses due to the variations with time. Therefore, as depicted in FIG. 4, when the constant load is applied to the target 50, the difference value between the first output voltage value and the second strain sensor 14 is constant regardless of time elapsing.

### (Procedure of Processing by Signal Processing Circuit 30)

FIG. 5 is a flowchart depicting a procedure of processing by the signal processing circuit 30 according to the embodiment.

First, the signal processing circuit 30 obtains the first output voltage value output from the analog-to-digital converter 26 (step S501). The signal processing circuit 30 can switch the output of the multiplexer 22 to the first output voltage value to cause the analog-to-digital converter 26 to output the first output voltage value.

Next, the signal processing circuit 30 obtains the second output voltage value output from the analog-to-digital converter 26 (step S502). The signal processing circuit 30 can switch the output of the multiplexer 22 to the second output voltage value to cause the analog-to-digital converter 26 to output the second output voltage value.

Then, the signal processing circuit 30 calculates the difference value between the first voltage value obtained in step S501 and the second voltage value obtained in step S502 as the load detection value indicating the load on the target 50 (step S503). The load detection value thus calculated is a result of the amount of variation with time of the first output voltage value being offset by the amount of variation with time of the second output voltage value, and indicates the load on the target 50 with high accuracy.

Thereafter, the signal processing circuit 30 outputs the load detection value calculated in step S503 to the external device 60, and ends the series of steps depicted in FIG. 5.

As described above, the signal processing circuit 30 according to the embodiment is a signal processing circuit 30 for detecting the load on the target 50; obtains the first output voltage value of the resistance-change-type first strain sensor 12, installed in such a manner that the resistance value changes in accordance with the strain of the target 50, and the second output voltage value of the resistance-change-type second strain sensor 14, installed in such a manner that the resistance value does not change in accordance with the strain of the target 50, and having the same electrical characteristics as those of the first strain sensor 12; and calculates the difference value between the first output voltage value and the second output voltage value as the load detection value indicating the load on the target 50.

Thus, the signal processing circuit 30 according to the embodiment can calculate the highly accurate load detection value in which the variation with time of the first output voltage value is offset by the variation with time of the second output voltage value.

In particular, in the signal processing circuit 30 according to the embodiment, the first output voltage value of the first strain sensor 12 and the second output voltage value of the second strain sensor 14 have the same amounts of variations with time.

Thus, the signal processing circuit 30 according to the embodiment can calculate a more accurate load detection value in which the amount of variation with time of the first output voltage value is more surely offset by the amount of variation with time of the second output voltage value.

Thus, the load detection device 10 according to the embodiment is a load detection device 10 configured to detect the load on the target 50; and includes: the resistance-change-type first strain sensor 12 provided in such a manner that the resistance value of the first strain sensor changes in accordance with the load on the target 50; the resistance-change-type second strain sensor 14 provided in such a manner that the resistance value of the first strain sensor does not change in accordance with the load on the target 50, the second strain sensor 14 having electrical characteristics that are the same as electrical characteristics of the first strain sensor 12; and the signal processing circuit 30 configured to calculate, as the load detection value indicating the load on the target 50, the difference value between the first output value of the first strain sensor 12 and the second output value of the second strain sensor 14.

Thus, the load detection device 10 according to the embodiment can calculate the highly accurate load detection value in which the variation with time of the first output voltage value is offset by the variation with time of the second output voltage value.

In particular, in the load detection device 10 according to the embodiment, the first output voltage value of the first strain sensor 12 and the second output voltage value of the second strain sensor 14 have the same amounts of variations with time.

Thus, the load detection device 10 according to the embodiment can calculate a more accurate load detection value in which the variation with time of the first output voltage value is more surely offset by the variation with time of the second output voltage value.

The load detection device 10 according to the embodiment further includes the multiplexer 22 for selectively switching between the first output voltage value of the first strain sensor 12 and the second output voltage value of the second strain sensor 14, and outputting either the first output voltage value of the first strain sensor 12 or the second output voltage value of the second strain sensor 14 to the signal processing circuit 30.

Thus, the load detection device 10 according to the embodiment can achieve a function of supplying the first output voltage value of the first strain sensor 12 and the second output voltage value of the second strain sensor 14 to the signal processing circuit 30 through a relatively simple circuit configuration.

The load detection device 10 according to the embodiment further includes a temperature correction function. Thus, the load detection device 10 according to the embodiment can correct the sensor output values of the first strain sensor 12 and the second strain sensor 14 in accordance with the temperature detected by the temperature sensor, and thereby can calculate the load detection value with higher accuracy.

The load detection device 10 according to the embodiment can calculate the degree of deterioration of the first strain sensor 12 and the second strain sensor 14 based on the difference between the initial value of the second output voltage value stored in the AFE chip 20 and the current value of the second output voltage value detected by the second strain sensor 14. Further, the load detection device 10 according to the embodiment may be configured to prompt the user with respect to the degradation tendency in accordance with the calculated degree of deterioration.

Although the embodiments of the present invention have been described in detail above, the present invention is not limited to the embodiments, and various variations or modifications are possible within the scope of the present invention claimed below.

For example, the circuit configuration of the load detection device 10 is not limited to that depicted in FIG. 1. That is, the circuit configuration of the load detection device 10 may be any circuit configuration at least such that the first output voltage value and the second output voltage value are input to the signal processing circuit 30. For example, the load detection device 10 may have a configuration where the amplifier 24 is not included.

Each of a "first physical sensor" and a "second physical sensor" may be any sensor as long as the sensor can be installed in such a manner that the detection value changes in accordance with the load on the target and can be installed in such a manner that the detection value does not change in accordance with the load on the target.

The present international application claims priority to Japanese patent application No. 2020-070475 filed on April 9, 2020, the entire contents of which are incorporated herein by reference.

### [Description of Reference Signs]

10 Load detection device
12 First strain sensor (first physical sensor)
14 Second strain sensor (second physical sensor)
20 AFE chip
22 Multiplexer
24 Amplifier
26 Analog-to-digital converter
30 Signal processing circuit
50 Target
60 External device

## Claims

1. A signal processing circuit configured to detect a load on a target,
wherein
the signal processing circuit is configured to obtain
a first output value of a first physical sensor that is provided in such a manner that a detection value of the first physical sensor changes in accordance with the load on the target, and
a second output value of a second physical sensor that is provided in such a manner that a detection value of the second physical sensor does not change in accordance with the load on the target, the second physical sensor having an electrical characteristic that is the same as an electrical characteristic of the first physical sensor, and
the signal processing circuit is further configured to calculate, as a load detection value indicating the load on the target, a difference value between the first output value and the second output value.

2. The signal processing circuit as claimed in claim 1,
wherein a variation with time of the first output value of the first physical sensor is the same as a variation with time of the second output value of the second physical sensor.

3. The signal processing circuit as claimed in claim 2,
wherein
the load detection value is obtained from removing a variation in the first output value of the first physical sensor, the variation being due to a degradation occurring in the first physical sensor with time, and a variation in the second output value of the second physical sensor, the variation being due to a degradation occurring in the second physical sensor with time.

4. A load detection device configured to detect a load on a target, the load detection device comprising:
a first physical sensor provided in such a manner that a detection value of the first physical sensor changes in accordance with the load on the target;
a second physical sensor provided in such a manner that a detection value of the second physical sensor does not change in accordance with the load on the target, the second physical sensor having an electrical characteristic that is the same as an electrical characteristic of the first physical sensor; and
a signal processing circuit configured to calculate, as a load detection value indicating the load on the target, a difference value between a first output value of the first physical sensor and a second output value of the second physical sensor.

5. The load detection device as claimed in claim 4,
wherein
a variation with time of the first output value of the first physical sensor is the same as a variation with time of the second output value of the second physical sensor.

6. The load detection device as claimed in claim 5,
wherein
the load detection value is obtained from removing a variation in the first output value of the first physical sensor, the variation being due to a degradation occurring in the first physical sensor with time, and a variation in the second output value of the second physical sensor, the variation being due to a degradation occurring in the second physical sensor with time.

7. The load detection device as claimed in any one of claims 4-6, further comprising
a multiplexer configured to selectively switch between the first output value of the first physical sensor and the second output value of the second physical sensor, and output either the first output value or the second output value to the signal processing circuit.
